# FASCICULE DE BREVET EUROPEEN

(11) **EP 3 679 689 B1**
(45) Date de publication et mention de la délivrance du brevet: **01.12.2021**
(21) Numéro de dépôt: 18759346.2
(22) Date de dépôt: 03.09.2018
(51) Int. Cl.: H04L 12/28, E06B 9/00, G05B 19/00, G05B 15/02, H04L 29/08

(54) **PROCÉDÉ DE CONFIGURATION ET/OU DE MAINTENANCE D'UN SYSTÈME DOMOTIQUE POUR UN BÂTIMENT ET SYSTÈME DOMOTIQUE ASSOCIÉ**
VERFAHREN ZUR KONFIGURATION UND / ODER WARTUNG EINES HEIMAUTOMATISIERUNGSSYSTEMS FÜR EIN GEBÄUDE UND ZUGEHÖRIGES HEIMAUTOMATISIERUNGSSYSTEM
METHOD OF CONFIGURATION AND/OR OF MAINTENANCE OF A HOME-AUTOMATION SYSTEM FOR A BUILDING AND ASSOCIATED HOME-AUTOMATION SYSTEM

(30) Priorité: 04.09.2017 FR 1758143
(43) Date de publication de la demande: 15.07.2020
(73) Titulaire: Somfy Activites SA, 74300 Cluses (FR)
(72) Inventeur: FARGIER, Sylvain, 74300 Cluses (FR)
(74) Mandataire: Lavoix
(86) Numéro de dépôt international: PCT/EP2018/073607
(87) Numéro de publication internationale: WO 2019/043222

(56) Documents cités:
- US-A1- 2006 220 862
- US-A1- 2008 183 307
- US-A1- 2008 273 486
- US-A1- 2011 213 867
- US-A1- 2016 218 804
- US-A1- 2016 218 884

## Description

La présente invention concerne un procédé de configuration et/ou de maintenance d'un système domotique pour un bâtiment ainsi qu'un système domotique associé.

Plus généralement, l'invention se rapporte au domaine des automatismes pour les bâtiments, aussi bien pour les bâtiments à usage commercial que les bâtiments à usage résidentiel, qu'ils soient individuels ou collectifs.

Il existe de nombreux bâtiments pourvus d'équipements commandables visant à assurer des fonctions de confort et de gestion d'énergie, comme le chauffage, la ventilation et la climatisation, mais aussi de gestion de l'éclairage et de pilotage des ouvrants, tels que des stores ou des volets roulants placés devant des fenêtres du bâtiment ou encore de la sécurisation à distance par contrôle de systèmes de fermetures (portes, serrures). Les automatismes sont les ensembles de règles qui régissent la commande des équipements électriques par un système de supervision programmable, afin d'assurer un meilleur confort des occupants du bâtiment ou encore d'optimiser la consommation d'énergie. Ces automatismes sont commandés par un système de supervision programmable, afin d'assurer un meilleur confort des occupants du bâtiment ou encore d'optimiser la consommation d'énergie. Ces applications sont désignées sous le terme « Gestion Technique du Bâtiment» ou, plus généralement, sous l'expression « Building Automation Systems » en langue anglaise. Dans le résidentiel, les automatismes sont plus souvent désignés par le terme de « domotique ». Pour simplifier, par la suite, le terme domotique sera utilisé pour désigner autant des applications résidentielles que tertiaires.

Typiquement, les équipements d'un même bâtiment sont connectés à une unité de commande, qui a pour fonction de superviser ces équipements et d'en piloter le fonctionnement. Cette connexion est souvent réalisée en raccordant les équipements par des liaisons filaires dédiées. Par exemple, chaque équipement est connecté directement à l'unité de commande au moyen d'un ou plusieurs câbles, suivant une configuration maître/esclave.

Une telle situation n'est cependant pas toujours satisfaisante, car la moindre modification du système domotique ou du fonctionnement des équipements nécessite un recâblage du système, ce qui est coûteux et compliqué à mettre en œuvre dans la mesure où cela requiert de faire appel à un installateur spécialisé.

Dans d'autres systèmes connus, cette connexion est réalisée en raccordant les équipements à un bus de données commun, tel qu'un bus multipoints autorisant une connexion bidirectionnelle, par exemple de type RS485. Ce bus de données est relié à l'unité centrale, de manière à former un réseau qui autorise l'échange de données entre les équipements et l'unité de commande.

Une telle situation présente cependant des inconvénients.

D'une part, l'installation du système est plus compliquée, car les équipements doivent être chacun configurés manuellement afin d'en configurer le fonctionnement et les rendre aptes à communiquer sur le réseau. Il faut donc rajouter, en sus d'une opération de câblage déjà lourde en elle-même, toute une phase de paramétrage réseau qui nécessite là encore l'intervention d'installateurs spécialisés.

De plus, dans une certaine mesure, cette situation offre aussi une flexibilité limitée, car toute modification postérieure à l'installation nécessite de recâbler le réseau, que ce soit pour ajouter de nouveaux équipements ou pour modifier leur répartition dans le bâtiment.

D'autre part, cette situation connue présente des limites en termes de nombre d'équipements pouvant être accueillis dans le réseau. Par exemple, les solutions de type RS485 couramment utilisées présentent des capacités d'adressage limitées, et ne permettent en pratique de ne connecter qu'au maximum 255 équipements individuels sur un même bus. Cette limite est rédhibitoire lorsqu'il s'agit d'équiper des bâtiments de grande taille et/ou comprenant un grand nombre d'équipements à gérer. Or, les applications contemporaines rendent nécessaire de pouvoir gérer un nombre d'équipements de plus en plus important, par exemple dans le cadre de l'internet des objets ou de la gestion dite intelligente des bâtiments.

En outre, l'architecture de ces réseaux connus peut conduire à l'apparition de temps de latence élevés lors de la communication entre un équipement et l'unité de commande. Cela s'explique notamment par le fait que la commande est centralisée et que les informations émises par les équipements doivent remonter vers le bus pour être traitées de façon centralisée par l'unité de contrôle. Or, pour certaines applications, un temps de latence trop élevé peut générer une insatisfaction chez l'usager souhaitant utiliser l'équipement, voire être préjudiciable au bon fonctionnement de l'équipement. Il est également possible d'organiser les équipements du bâtiment selon des réseaux de communication.

Dans les systèmes domotiques pour bâtiment, les éléments communicants (équipements domotiques ou équipements réseau) sont utilisés à des fréquences très faibles. A titre d'exemple, un actionneur est utilisé en moyenne quatre fois par jour, soit une utilisation totale d'environ cinq minutes par jour. Il reste donc inactif pendant près de 99,7% du temps. Chaque élément communicant comprend un ou plusieurs microprocesseurs, qui sont aussi sous exploités. Un système domotique comprenant plusieurs équipements communicants, une grande partie de la puisance de calcul du système domotique est de fait inexploitée.

Dans d'autres systèmes domotiques pour bâtiment connus, le système domotique est géré par une unité de commande centrale capable d'effectuer un nombre prédéfini de fonctionnalités. Un problème se pose lorsque l'on souhaite faire évoluer le système domotique. Si la capacité limite de l'unité de commande est atteinte, aucune fonction supplémentaire ne peut être ajoutée sans changer l'unité de commande centrale. De même, dans un tel système domotique, il est impossible d'ajouter une fonctionnalité non prise en charge par l'unité de commande centrale sans changer cette dernière.

Le même problème se pose lorsque l'utilisateur souhaite reconfigurer son système domotique géré par une unité de commande centralisant toutes les commandes du système domotique. D'une façon générale, un tel système domotique propose une capacité d'adaptation assez faible face à une augmentation du nombre de fonctionnalités au-delà de ce qui avait été prévu initialement lors de l'installation du système domotique.

Un tel système est par exemple décrit par le document US 2016/218804 A1.

C'est à tout ou partie de ces inconvénients qu'entend plus particulièrement remédier l'invention en proposant une solution simple pour configurer, voire reconfigurer, un système domotique pour bâtiment, ainsi que pour assurer la maintenance de ce système domotique.

A cet effet, l'invention concerne un procédé suivant la revendication 1. En particulier, ce procédé de configuration d'un système domotique pour un bâtiment est mis en œuvre par un dispositif de configuration, le système domotique comprenant une pluralité d'éléments communicants afin d'effectuer une pluralité de fonctions domotiques et un réseau de communication auquel sont connectés les éléments communicants, chaque élément communicant comprenant une interface réseau possédant une adresse réseau.

Grâce à l'invention, le réseau de communication permet de gérer un grand nombre d'équipements domotiques au sein du bâtiment, tout en présentant une flexibilité d'installation et d'évolution accrue.

Selon des aspects avantageux mais non obligatoires de l'invention, un tel procédé peut incorporer une ou plusieurs des caractéristiques suivantes, prises isolément ou suivant toute combinaison techniquement admissible :
- L'étape de programmation comporte de transmettre, à au moins certaines ressources, les liens établis.
- Les liens entre les entrées, les unités logiques et les sorties sont établis de façon automatique par le dispositif de configuration, en fonction de bibliothèques stockées dans une zone mémoire du dispositif de configuration.
- La mise en œuvre du procédé est divisée entre plusieurs unités logiques distinctes réparties dans le réseau de communication.
- Le procédé est mis en œuvre automatiquement par le dispositif de configuration à la suite de sa connexion en un point quelconque du réseau de communication.

Selon un autre aspect, l'invention concerne un système suivant la revendication 6. En particulier, ce système domotique pour un bâtiment est configuré par le procédé de configuration selon une des revendications 1 à 5.

Selon des aspects avantageux mais non obligatoires de l'invention, un tel système peut incorporer une ou plusieurs des caractéristiques suivantes, prises isolément ou suivant toute combinaison techniquement admissible :
- Chaque ressource est identifiée par un identifiant de ressource unique contenant l'adresse réseau de l'interface réseau de l'élément communicant modélisé, au moins en partie, par cette ressource.
- Un capteur ou un point de commande est modélisé sous la forme d'au moins une entrée.
- Un appareil domotique commandable est modélisé sous la forme d'au moins une sortie.
- Un équipement réseau est modélisé sous la forme d'au moins une unité logique.
- Le réseau de communication (14) est agencé sous forme de réseau hiérarchique.

Selon un autre aspect, l'invention concerne un procédé selon la revendication 12. En particulier, c'est un procédé de maintenance d'un système domotique selon l'une des revendications 6 à 11.

Selon des aspects avantageux mais non obligatoires de l'invention, un tel procédé peut incorporer une ou plusieurs des caractéristiques suivantes, prises isolément ou suivant toute combinaison techniquement admissible :
- Le procédé comprend en outre une étape de reprogrammation de fonctions domotiques du système domotique en tenant compte d'une nouvelle cartographie des ressources dans le réseau de communication et/ou de nouvelles fonctions domotiques à réaliser.
- Le procédé comprend en outre une étape de correction de ressources et/ou de liens défectueux.

L'invention sera mieux comprise et d'autres avantages de celle-ci apparaîtront plus clairement à la lumière de la description qui va suivre, d'un mode de réalisation d'un système domotique pour un bâtiment, donnée uniquement à titre d'exemple et faite en référence aux dessins annexés sur lesquels :
- la figure 1 est une représentation schématique d'un bâtiment comprenant un système domotique conforme à un mode de réalisation de l'invention ;
- la figure 2 est une représentation schématique d'un réseau de communication du système domotique de la figure 1 pour connecter des équipements du système domotique ;
- la figure 3 est une représentation schématique d'une interface réseau utilisée dans des équipements du système domotique appartenant au réseau de communication de la figure 2 ;
- la figure 4 est une représentation schématique d'un appareil réseau utilisé dans le réseau de communication de la figure 2 ;
- la figure 5 est une illustration schématique d'une représentation logicielle d'un des équipements domotiques du système domotique, au sein d'une interface de programmation applicative mise en œuvre par une couche logicielle du système domotique.

Par la suite, l'invention sera décrite en référence à un mode de mise en œuvre particulier dans lequel l'architecture réseau du système domotique pour bâtiment correspond à l'architecture du bâtiment. Cet exemple n'est nullement limitatif et l'invention peut être appliquée à d'autres architectures réseau.

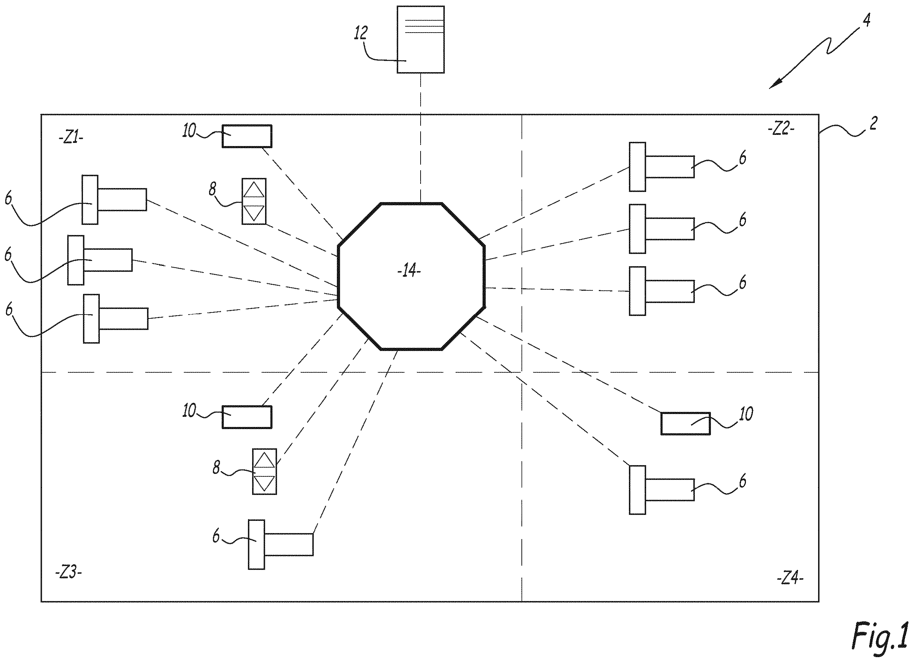

La figure 1 représente un bâtiment 2, comprenant plusieurs zones Z1, Z2, Z3, Z4. Le bâtiment 2 est équipé d'un système domotique 4 qui comporte un ensemble d'équipements domotiques répartis dans les zones du bâtiment 2, ainsi qu'un système de commande de ces équipements domotiques.

Le système domotique 4 est ici destiné à procurer des fonctions de confort et/ou de gestion d'énergie du bâtiment 2, comme le chauffage, la ventilation et la climatisation, ainsi que des fonctions de gestion de l'éclairage, de pilotage des ouvrants, tels que des stores ou des volets roulants placés devant des fenêtres du bâtiment 2 et/ou des fonctions de sécurité comme la surveillance de locaux et d'alarme.

L'ensemble d'équipements domotiques comprend des équipements domotiques tels que des appareils domotiques commandables 6, des points de commande 8 et des capteurs 10.

Le système de commande comporte notamment une unité de commande 12 programmable et un réseau de communication 14, interne au bâtiment 2, le réseau de communication 14 étant agencé pour permettre la communication les équipements domotiques du système domotique 4 avec l'unité de commande 12. Les équipements domotiques du système domotique 4 qui sont connectés à ce réseau de communication 14 sont, dans ce qui suit, dits appartenir au réseau de communication 14.

Les équipements domotiques et le système de commande sont ici raccordés à une ou plusieurs sources d'alimentation électrique, non illustrée, du bâtiment 2.

Les zones du bâtiment 2 correspondent à des portions du bâtiment 2 qui sont situées à l'intérieur et/ou l'extérieur de ce bâtiment et qui sont destinées à recevoir chacune une partie des équipements domotiques du système domotique 4.

Le bâtiment 2 peut être un ensemble de bureaux, ou un bâtiment à usage d'habitation, ou un bâtiment à usage commercial ou industriel, ou toute combinaison de ces usages. Il peut notamment s'agir d'un immeuble ou d'une maison individuelle.

Ainsi, au sens de la présente description, le terme « domotique » n'est pas limité à un usage purement domestique et résidentiel.

Par exemple, des zones du bâtiment 2 correspondent à des niveaux du bâtiment 2, tels que des étages ou des sous-sols. Ces zones peuvent aussi être des pièces ou des groupes de pièces du bâtiment 2, éventuellement séparées les unes des autres par des cloisons, ces pièces pouvant être réparties au sein d'un ou plusieurs niveaux du bâtiment 2. Ces zones peuvent également correspondre à des façades ou des parties de façade, comme une partie de façade correspondant à un même étage. Ces zones peuvent être délimitées de façon indépendante de la structure physique du bâtiment 2. Par exemple, une même pièce du bâtiment 2 peut comporter plusieurs zones. De telles zones peuvent également être situées à l'extérieur du bâtiment 2, par exemple lorsqu'elles correspondent à une façade ou une portion de façade du bâtiment 2.

Ces zones sont par exemple définies lors de la conception du bâtiment 2 et/ou lors de la conception et/ou l'installation du système domotique 4.

De préférence, les zones du bâtiment 2 sont distinctes les unes des autres. Toutefois, en variante, des zones du bâtiment 2 peuvent se recouper et/ou être imbriquées entre elles.

Dans cet exemple, seules quatre zones, ici notées Z1, Z2, Z3 et Z4, sont définies en référence au bâtiment 2. Toutefois, en pratique, ce nombre peut être différent. Il est notamment adapté en fonction de la configuration du bâtiment 2 et des fonctions du système domotique 4.

Pour simplifier la figure 1, les zones Z1, Z2, Z3 et Z4 sont illustrées de façon schématique à l'intérieur d'un même étage du bâtiment 2.

De préférence, chaque appareil domotique 6 commandable comporte un actionneur pilotable au moyen d'au moins un signal de commande.

Les appareils domotiques commandables 6 sont ici illustrés de façon identique. Toutefois, ils peuvent présenter des différences entre eux et assurer des fonctions différentes au sein du système domotique 4.

Par exemple, l'actionneur de l'appareil 6 contient un moteur électrique couplé avec une charge mécanique et agencé pour déplacer et/ou régler un élément du bâtiment 2.

Selon un exemple, la charge mécanique de l'appareil 6 est un volet occultant, tel qu'un panneau, un store ou un rideau opaque, associé à au moins une ouverture du bâtiment 2, telle qu'une fenêtre ou une baie vitrée. Le déplacement de ce volet occultant permet de réguler la quantité d'ensoleillement reçue par le bâtiment 2 au travers de cette ouverture.

Selon un autre exemple, la charge mécanique de l'appareil 6 est un compresseur adapté pour mettre en œuvre un cycle de détente-compression d'un fluide caloporteur au sein d'un système de réfrigération du bâtiment 2, tel qu'un climatiseur ou une pompe à chaleur, en vue de réguler la température à l'intérieur du bâtiment 2.

Selon encore un autre exemple, la charge mécanique de l'appareil 6 est une pompe ou un ventilateur destiné à mettre en mouvement un volume de fluide au sein du bâtiment 2, par exemple pour aspirer ou souffler de l'air au sein d'un système de ventilation, ou pour faire circuler de l'eau ou un fluide caloporteur au sein d'une conduite dédiée.

En variante, l'actionneur de l'appareil 6 peut piloter un dispositif de commutation électrique, afin de commander l'allumage et l'extinction d'une source lumineuse, telle qu'une batterie de lampes au néon ou à diodes électroluminescentes, au sein du bâtiment 2.

L'appareil domotique commandable 6 peut également être un éclairage, par exemple, un éclairage intérieur, extérieur ou un système de commande d'éclairage, un système d'alarme, ou encore une caméra vidéo, en particulier une caméra de vidéosurveillance.

Un point de commande 8 est destiné à recevoir des instructions de pilotage de la part d'un utilisateur du bâtiment 2, en vue de piloter, directement ou indirectement, un ou plusieurs des appareils domotiques 6 commandables et/ou de piloter l'unité de commande 12.

A cet effet, chaque point de commande 8 comporte ici une interface homme-machine, non illustrée, comprenant des moyens d'entrée de données, tels qu'un ou plusieurs interrupteurs et/ou un ou plusieurs boutons poussoirs et/ou un ou plusieurs boutons rotatifs et/ou un écran tactile. Le point de commande 8 peut aussi comporter une interface de connexion pour y raccorder des moyens de commande externes, par exemple un ou plusieurs interrupteurs individuels disposés autour du point de commande 8 et étant raccordés par une liaison filaire à ce dernier.

L'interface homme-machine du point de commande 8 peut également comporter des moyens d'affichage, tels que des témoins lumineux et/ou un écran électronique, par exemple à cristaux liquides, pour afficher, à destination de l'utilisateur, des informations relatives au fonctionnement du système domotique 4 ou à des instructions saisies sur ladite interface homme-machine.

Les points de commande 8 peuvent se présenter sous la forme d'une télécommande portative associée à un récepteur fixe ou, en variante, d'un terminal de commande fixe solidarisé à un mur du bâtiment 2.

Là encore, les points de commande 8 sont ici illustrés de façon identique, mais ils peuvent présenter des différences entre eux et assurer des fonctions différentes au sein du système domotique 4.

Chaque capteur 10 est destiné à convertir une ou plusieurs grandeurs physiques relatives à l'état du bâtiment 2 ou de son environnement ou d'un équipement domotique en un ou plusieurs signaux proportionnels à cette grandeur physique. Ce signal est, par exemple, un signal électrique, un signal lumineux ou un signal radiofréquence. Ce signal peut être transmis par le capteur à destination d'au moins un équipement domotique et/ou du système de commande, par exemple, à destination de l'unité de commande 12.

Un ou plusieurs capteurs 10, peuvent être intégrés à un appareil domotique commandable 6, à un point de commande 8 ou encore à l'unité de commande 12. L'installation domotique 4 peut également comprendre un ou plusieurs capteurs indépendants à ces éléments.

Par exemple, les grandeurs physiques mesurées par les capteurs 10 sont, de façon non limitative, une température, par exemple une température d'un mur ou de l'air ambiant, un taux d'humidité, une valeur de luminosité, ou une valeur de pression de l'air ambiant, une valeur de consommation par exemple d'eau, de gaz ou d'électricité, l'état d'ouverture d'un volet roulant, la position d'un ouvrant tel une fenêtre, motorisée ou non ou encore la présence ou l'absence d'un utilisateur.

Là encore, les capteurs 10 sont ici illustrés de façon identique mais peuvent présenter des différences entre eux au sein du système domotique 4.

De manière générale, chaque équipement domotique comprend une interface réseau 40, qui lui permet de communiquer sur le réseau 14 et qui sera définie plus loin dans la description.

A titre d'exemple illustratif, à la figure 1, la zone Z1 comporte trois appareils domotiques 6 commandables, un point de commande 8 et un capteur 10. La zone Z2 comporte trois appareils domotiques 6 commandables. La zone Z3 comporte un appareil domotique 6, un point de commande 8 et un capteur 10. La zone Z4 comporte un appareil domotique 6 et un capteur 10.

Par exemple, les trois appareils domotiques 6 commandables de la zone Z2 sont adaptés pour déplacer des volets occultants équipant des ouvertures du bâtiment 2 ménagées au niveau de cette zone Z2. Toujours dans cet exemple, les appareils domotiques 6 commandables de la zone Z1 font ici partie d'un système de climatisation et de réfrigération de l'air circulant dans la zone Z1. Leur fonctionnement est régulé en fonction d'ordres de pilotage reçus par le point de commande 8 et en fonction d'une température mesurée par le capteur 10 situés dans cette zone Z1.

Chaque équipement domotique du système domotique 4, dont notamment les appareils 6, les points de commande 8 et les capteurs 10, est connecté à l'unité de commande 12 par l'intermédiaire du réseau de communications 14 et comporte à cet effet une interface réseau 40 pour se connecter à ce réseau de communications 14.

Par exemple, chaque appareil domotique 6 reçoit des signaux de commande par l'intermédiaire du réseau de communications 14. Chaque point de commande 8 transmet les instructions de pilotage reçues par l'intermédiaire du réseau de communications 14. Chaque capteur 10 envoie les informations mesurées par l'intermédiaire du réseau de communications 14.

La communication s'effectue selon un protocole de communication donné.

Par exemple, la communication s'effectue par un échange de messages, par exemple sous forme de paquets, ces messages contenant chacun un en-tête, qui inclut une destination du message, et des données utiles, comme ordre de commande ou une valeur de grandeur physique mesurée par un capteur.

De préférence, le protocole de communication utilisé est un protocole IP (« Internet Protocol »), par exemple le protocole IPv6. En variante, le protocole de communication est le protocole IPv4.

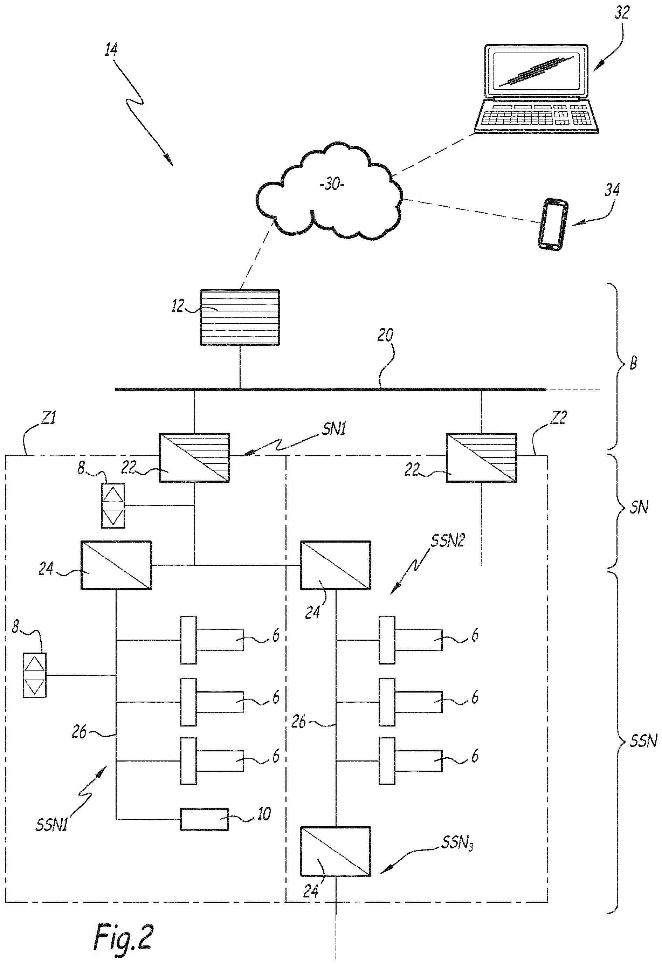

La figure 2 représente plus en détail l'exemple du réseau de communication 14 de la figure 1. Pour faciliter la lecture de cette figure 2, les équipements domotiques 6, 8, 10 associés aux zones Z3 et Z4 du bâtiment 2 n'y sont pas illustrés.

Le réseau de communication 14 est un réseau hiérarchique à plusieurs niveaux de hiérarchie, également appelé rangs. Il comporte un réseau principal B, qui comprend notamment un bus de données commun, formant une liaison physique dorsale 20, aussi dite « backbone » en langue anglaise, à laquelle l'unité de commande 12 est connectée.

Le réseau de communication 14 comporte également au moins un sous-réseau, noté de façon générique par la référence SN. Ce sous-réseau comporte un équipement réseau 22, 24, qui est directement connecté à la liaison dorsale 20 par l'intermédiaire d'une interface réseau 40 et qui forme la tête de ce sous-réseau SN. Il peut s'agir d'un équipement réseau d'interconnexion, également appelé passerelle 22, destiné à interconnecter deux parties de réseaux distinctes, par exemple, de technologies différentes. Il peut également s'agir d'un routeur 24 lorsque le réseau principal B et le sous-réseau SN sont de même nature. Les passerelles et les routeurs ont des fonctionnements semblables à différence que le routeur ne convertit pas les formats de transmissions de données. Ces deux équipements réseau sont des éléments intermédiaires du réseau de communication 14 assurant le routage des paquets. Leur rôle est de faire transiter des paquets d'une interface réseau 40 vers une autre selon un ensemble de règles formant une table de routage.

Dans l'exemple de la figure 2, deux passerelles 22 sont connectées à la liaison dorsale 20, formant ainsi deux sous-réseaux SN1 et SN2 distincts. Seul l'un de ces deux sous-réseaux, portant la référence SN1, est décrit dans ce qui suit.

En variante, le nombre de sous-réseaux SN peut être différent.

Les sous-réseaux SN sont directement connectés au réseau principal par l'intermédiaire de passerelles, et ont un premier rang associé dans le réseau hiérarchique.

Chaque sous-réseau SN contient au moins un équipement domotique 6, 8, 10 du système domotique 4, connecté à la passerelle 22 correspondante par l'intermédiaire d'une liaison physique 26, de préférence câblée.

Le réseau de communication 14 comporte en outre des sous-sous-réseaux de rang inférieur à celui des sous-réseaux SN, et sont notés de façon générique par la référence SSN.

Chaque sous-sous-réseau SSN comporte un équipement réseau, avantageusement un routeur 24, le connectant à un sous réseau SN ou à un sous-sous-réseau de niveau hiérarchique supérieur au sien. L'équipement réseau 22, 24, forme la tête de ce sous-sous-réseau SSN.

En référence à l'exemple de la figure 2, si un rang « n » est associé au sous-réseau SN1, chaque sous-sous-réseau SSN1 et SSN2 a un rang « n-1 » associé, et le sous-sous-réseau SSN3 a un rang « n-2 ».

Chaque routeur 24 tête de sous-sous-réseau de rang « n-1 » est connecté à une passerelle 22 par l'intermédiaire d'une liaison physique 26, de préférence câblée.

Lorsque le réseau de communication 14 comporte plusieurs niveaux de hiérarchie, chaque équipement réseau 22, 24 tête de sous-sous-réseau de rang « n-k », avec k supérieur ou égal à 2, est connecté à un routeur 24 de rang supérieur « n-k+1 », par l'intermédiaire d'une liaison physique 26, de préférence câblée.

Dans un mode de réalisation, le réseau hiérarchique peut comprendre jusqu'à douze niveaux de hiérarchie, en incluant celui du réseau principal B.

Chaque sous-sous-réseau SSN comporte un ou plusieurs équipements domotiques 6, 8, 10, connectés au routeur 24 correspondant par l'intermédiaire d'une liaison physique 26, chaque équipement domotique étant connecté à la liaison physique 26 à l'aide de leurs interfaces réseau 40 respectives. Les équipements domotiques connectés, via une même liaison physique 26, à un même routeur 24 sont ici dits faire partie d'un même sous-réseau local.

De préférence, les sous-réseaux SN et chaque sous-sous-réseau SSN de rang inférieur à celui du sous-réseau SN sont associés chacun à une zone du bâtiment 2.

Un sous-réseau SN et/ou un sous-sous-réseau SSN est dit « associé » à une zone Z1, Z2, Z3, Z4 du bâtiment 2 lorsque les équipements domotiques 6, 8, 10 appartenant à ce sous-réseau sont eux-mêmes associés à cette zone, par exemple parce qu'ils sont physiquement localisés à l'intérieur de cette zone Z1, Z2, Z3, Z4 du bâtiment 2.

Le nombre et la structure des sous-réseaux SN et des sous-sous-réseaux SSN, ainsi que leur association aux zones du bâtiment 2, sont de préférence choisis en fonction de la configuration du bâtiment 2 et des fonctionnalités remplies par le système domotique 4.

De préférence, les liaisons physiques 26 sont des bus de données série multipoints de type RS485 ou EIA-485.

De préférence, la liaison physique 26 qui connecte chaque équipement réseau22, 24 entre eux et qui les connecte aux équipements domotiques 6, 8, 10 est un bus de données série multipoints de type RS485.

L'utilisation d'une liaison physique 26 de type RS485 présente des avantages dans ce réseau de communication 14, car elle rend possible l'utilisation de bus de données de grande longueur, par exemple jusqu'à 1km de long, sans trop dégrader la qualité du signal qui y circule. La limitation du nombre d'équipements domotiques 6, 8, 10 et/ou d'équipements réseaux 22, 24 connectés sur une même liaison physique 26 n'est pas pénalisante, grâce à l'architecture hiérarchique qui permet de connecter un nombre important de sous-réseaux.

De façon optionnelle, l'unité de commande 12 est adaptée pour être connectée à un réseau de données extérieur 30, tel que le réseau internet, indépendamment du réseau de communication 14.

De cette manière, l'unité de commande 12 peut communiquer avec un serveur informatique distant connecté à ce réseau extérieur 30, par exemple pour envoyer des rapports sur l'état de fonctionnement du système domotique 4 à des fins de diagnostic, ou encore pour recevoir des instructions de pilotage. L'unité de commande 12 peut également communiquer par le réseau extérieur 30 avec un ou plusieurs utilisateurs distants par exemple pourvus d'un terminal de communication comme un ordinateurs 32, un appareil de téléphonie mobile intelligent ou « *smartphones* » en langue anglaise, une tablette tactile ou tout autre équipement équivalent.

Le réseau de communication 14 est adapté pour fonctionner suivant un protocole de communication prédéfini, tel que le protocole IP, afin d'assurer une communication entre les éléments communicants du système domotique 4 qui sont connectés à ce réseau de communication 14.

Dans le mode de réalisation préféré, le protocole de communication utilisé est le protocole IPv6.

Ce protocole de communication est ici implémenté à l'aide des interfaces réseau 40 qui équipent les divers équipements domotiques 6, 8, 10 et équipements réseau 22, 24 du système domotique 4 qui sont connectés par le réseau de communication 14, notamment grâce à leur interface réseau 40.

Par la suite, on désignera par le terme générique « élément communicant », les équipements réseau 22, 24 et les éléments communicants 6, 8, 10.

Les routeurs 24 et la ou les passerelles 22 comportent des interfaces réseau spécifiques. Par exemple, ces interfaces réseau implémentent chacune une pile de protocole, c'est-à-dire un empilement de couches de protocole, chaque couche de protocole s'appuyant sur celles qui sont en dessous afin d'y apporter un supplément de fonctionnalité.

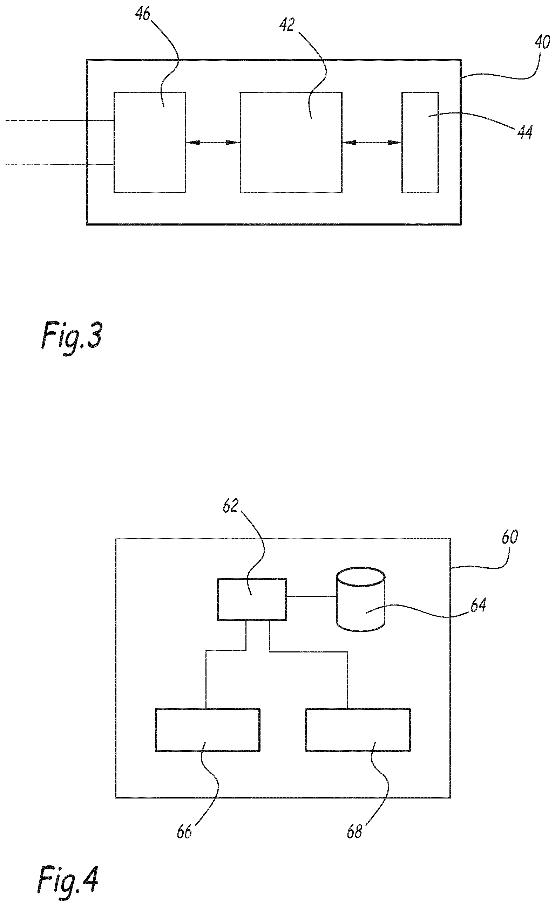

La figure 3 représente de façon schématique l'interface réseau d'un élément communicant. L'interface réseau d'un élément communicant a pour fonction de connecter cet élément communicant à un ou plusieurs réseaux de communication. Elle lui permet ainsi de communiquer avec les autres éléments communicants du ou des réseaux auquel il est connecté.

Comme illustré sur la figure 3, chaque interface réseau 40 comporte un contrôleur réseau 42, une mémoire 44 et un module d'entrée-sortie 46, aussi nommé « transceiver » en langue anglaise, le module d'entrée-sortie 46 étant ici pourvu d'un connecteur agencé pour raccorder physiquement le module d'entrée-sorties 46 à une couche physique du réseau de communication 14.

Dans cet exemple, la couche physique du réseau de communication 14 est en partie formée par les liaisons physiques 26.

Le contrôleur réseau 42 comporte un calculateur électronique, par exemple un ou plusieurs processeurs, microprocesseurs ou tout autre moyen équivalent, programmé pour assurer le traitement des données transitant par le réseau de communication 14 et par le connecteur du module d'entrée-sortie 46.

Par exemple, le contrôleur réseau 42 est programmé pour traiter automatiquement les données reçues par le module d'entrée-sortie 46 et étant destinées à l'interface réseau 40. Le traitement peut par exemple consister à extraire et décoder le contenu de paquets reçus par l'interface réseau et/ou transmettre ce contenu à l'équipement domotique auquel il est associé.

De façon complémentaire, le contrôleur réseau 42 est programmé pour préparer automatiquement les données émises par l'équipement domotique auquel il est associé, en vue de leur envoi vers un ou plusieurs équipements domotiques connectés au réseau de communication 14.

Enfin, le contrôleur réseau 42 est adapté à mettre en œuvre des instructions de code de programme permettant d'exécuter des étapes du procédé de configuration d'adresse réseau selon l'invention.

Les bus de données de type RS485, utilisés ici pour former, notamment, la liaison physique 26, comportent chacun une paire de fils conducteurs, de préférence torsadés. Pour transmettre des données sur ce bus, un signal porteur est émis, par exemple sous la forme d'une tension électrique entre cette paire de fils conducteurs, cette tension pouvant prendre des valeurs prédéfinies de façon à encoder une information, par exemple de façon binaire. La forme du signal porteur est par exemple définie par la norme TIA/EIA-485-A.

Dans cet exemple, la liaison 26 est une liaison bidirectionnelle de type « half-duplex ».

La mémoire 44 contient ici une adresse réseau, non illustrée, qui identifie de façon unique l'interface 40 sur le réseau 14 et qui donc identifie l'équipement domotique correspondant sur le réseau 4. L'interface réseau 40 est ici compatible avec le standard IPv6. Ainsi, l'adresse réseau est une adresse IP, de préférence de type IPv6.

En outre, la mémoire 44 contient avantageusement des instructions exécutables pour assurer le fonctionnement précédemment décrit du contrôleur 42.

La figure 4 représente schématiquement un équipement réseau 60 générique destiné à être utilisé dans le réseau 14. L'équipement 60 correspond par exemple au routeur 24.

Cet équipement 60 comporte un calculateur électronique 62, une mémoire informatique 64, une première interface réseau 66 et une deuxième interface réseau 68. L'interface 66 est par exemple destinée à être connectée à un premier sous-réseau, alors que l'interface 68 est destinée à être connectée à un deuxième sous-réseau, de rang inférieur au premier sous-réseau. Les interfaces réseau 66 et 68 sont, par exemple, chacune physiquement similaires à l'interface 40. Le dispositif 60 comporte une adresse réseau 50 qui l'identifie au moins au sein du premier sous-réseau.

Le calculateur électronique 62 est notamment programmé pour assurer un routage des paquets de données arrivant depuis la partie de réseau associé à l'une ou l'autre des interfaces 66 ou 68 vers une partie de réseau accessible au travers de l'autre interface 66 ou 68, en fonction de la destination de ces paquets de données. A cet effet, l'équipement 60 comporte ici une table de routage, par exemple enregistrée au sein de la mémoire 64.

Par exemple, pour le routeur 24, les interfaces 66 et 68 sont ici compatibles avec les bus de données de type RS485. Tout ce qui est décrit en référence des interfaces 40 s'applique donc aux interfaces 66 et 68.

La passerelle 22 présente un fonctionnement semblable à celui de l'appareil 60 décrit ci-dessus, sauf qu'ici l'interface réseau 66 est connectée avec la liaison dorsale 20.

Le protocole de communication utilisé par le réseau 14 permet d'assurer l'adressage des messages échangés entre les éléments du système 44 par un mécanisme de commutation de paquets.

Par exemple, lorsqu'un élément du système 4, tel qu'un point de commande, doit envoyer des données à destination d'un autre élément du système 4, tel qu'un appareil 6, alors le premier appareil génère un message contenant les données à envoyer et contenant l'adresse de l'élément de destination. Le message est ainsi routé au sein du réseau 14 jusqu'à atteindre sa destination. Plus précisément, le message destiné à un équipement local appartenant au même groupe transite par l'intermédiaire du bus 26. Le message destiné à un équipement situé à l'extérieur du groupe est routé au moyen du routeur 24 associé à ce groupe, qui le redirige vers le sous-réseau correspondant, éventuellement par l'intermédiaire des équipements 22 et de la liaison dorsale 20.

Plus précisément, dans cet exemple, le protocole réseau utilisé au sein du réseau de communication 14 et, notamment, implémenté par les interfaces réseau 40, comporte ici plusieurs couches de protocole liées entre elles. Ces couches de protocole sont chacune implémentées par la pile de protocole de chaque interface réseau 40 par des moyens logiciels et/ou électroniques, notamment grâce au contrôleur de réseau 42.

Le système domotique 4 comporte également une couche applicative logicielle, programmée pour former un système domotique 4 suivant une architecture compatible REST, pour « REpresentational State Transfer » en langue anglaise également appelée architecture « RESTful » .

Dans cette couche applicative logicielle, les ressources que peut fournir chaque équipement domotique 6, 8, 10 et chaque équipement réseau 22, 24 à chaque instant sont accessibles au moyen d'une interface logicielle de programmation applicative, dite API pour « Application Programming Interface » en langue anglaise, implémentée au niveau de chaque élément communicant 6, 8, 10, 22, 24notamment par le calculateur électronique qui lui est associé.

Cette interface logicielle de programmation applicative comprend un ensemble de fonctions et/ou de méthodes prédéfinies, de préférence implémentée de façon identique sur tous les éléments communicants du réseau de communication 14. Ainsi, les ressources de chaque équipement domotique 6, 8, 10 et de chaque équipement réseau 22, 24 sont représentées de façon uniforme, standardisée, et sont accessibles par l'interface logicielle de programmation applicative sans avoir à se soucier de la structure sous-jacente de l'élément communicant 6, 8, 10, 22, 24.

Chaque élément communicant 6, 8, 10, 22, 24 comporte un calculateur électronique, non illustré, qui est programmé pour implémenter cette interface logicielle de programmation applicative, grâce à des instructions logicielles exécutables.

Par exemple, ce calculateur électronique comporte une ou plusieurs unités de calcul logique programmable, telle qu'un microprocesseur ou un microcontrôleur.

Ce calculateur électronique comprend également un support de stockage de données ainsi qu'une mémoire informatique de travail. Par exemple, les instructions logicielles exécutables pour la mise en œuvre de l'interface logicielle de programmation applicative sont stockées dans le support de stockage de données. Ce support de stockage de données et cette mémoire informatique de travail peuvent, en variante, être tous les deux implémentés sur un même support d'enregistrement d'information non volatile, tel qu'un module de mémoire Flash.

Le calculateur électronique de l'interface réseau 40 permet d'échanger des données au sein du réseau de communication 14, par exemple avec d'autres nœuds du réseau de communication pourvus d'une application analogue. En particulier, sur chaque élément communicant, le calculateur électronique est programmé pour interagir avec la pile de protocole implémentée par l'interface réseau 40, et de préférence, pour interagir plus particulièrement avec la couche de protocole de l'interface réseau 40 précédemment décrite.

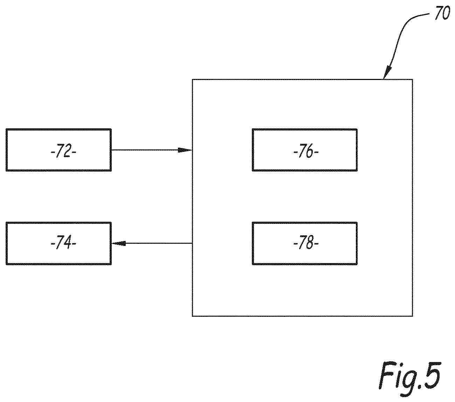

Avec cette interface logicielle de programmation applicative, chaque élément communicant 6, 8, 10, 22, 24 est représenté sous forme d'un ou plusieurs objets logiciels 70, dont un exemple est illustré de façon générique sur la figure 5, au sein de cette couche applicative.

En d'autres termes, chaque objet logiciel 70 est une représentation logicielle d'au moins une partie d'un élément communicant, implémentée par le calculateur électronique précédemment décrit et incorporé dans cet élément communicant 6, 8, 10, 22, 24. Un même élément communicant peut ainsi comporter plusieurs objets logiciels 70, de préférence organisés selon une arborescence hiérarchique avec un objet dit « père » comprenant un ou plusieurs objets logiciels « fils ».

L'interface réseau de chaque élément communicant implémente un ou plusieurs objets logiciels 70 qui représentent cet élément communicant de façon abstraite sous forme de ressources. Le système domotique comprend trois types de ressource : les entrées 72, les sorties 74 et les unités logiques 76. Par exemple, chaque objet logiciel 70 comporte une ou plusieurs entrées 72, une ou plusieurs sorties 74 et/ou une ou plusieurs unités logiques 76. Chacune de ces ressources possède un état 78 défini qui peut varier au cours du temps. A titre d'exemple, l'état d'un capteur de vent peut correspondre à la vitesse de vent mesurée.

L'état 78 est ici implémenté par une structure de données, telle qu'une variable numérique, une variable booléenne ou une chaîne de caractères, qui est stockée dans le support de stockage de données ou dans la mémoire de travail.

De préférence, tous les objets logiciels 70 sont structurés de façon similaire.

Les entrées 72 correspondent aux éléments communicants permettant de fournir des données en entrée du système domotique 4. Il peut s'agir, par exemple de capteurs ou de point de commande. Les données peuvent correspondre à un signal représentatif d'une grandeur physique, par exemple une grandeur physique associée à une fonction domotique dans le bâtiment 2, telle qu'une température, une vitesse de vent ou une intensité lumineuse. Les données d'entrée peuvent provenir du bâtiment ou de son environnement. Les entrées 72 peuvent également correspondre à une ou plusieurs bases de données ou une ou plusieurs mémoires, les données d'entrées associées à ces types d'entrées correspondant aux valeurs stockées dans ces bases de données ou mémoires. Les bases de données et mémoires comprennent une adresse réseau de façon à pouvoir être adressable.

Les sorties 74 correspondent par exemple aux moteurs et/ou aux actionneurs.

Les unités logiques 76 interprètent et traitent les données fournies par les entrées 72. Les unités logiques 76 peuvent être configurées pour mettre en œuvre des opérations logiques et/ou des opérations de calcul plus ou moins complexes selon le type de données d'entrées et/ou suivant le type d'application. Il peut s'agir, par exemple, d'opérations de comparaison. L'unité logique peut, par exemple, comparer une ou plusieurs données d'entrées entre elles ou comparer une ou plusieurs données d'entrées par rapport à une ou plusieurs valeurs de seuil prédéterminées. L'unité logique peut être configurée pour mettre en œuvre des fonctions de type hystérésis, par exemple pour déterminer un délai d'activation en fonction d'un historique de fonctionnement, notamment dans le cas de la gestion d'une température par un système de chauffage/climatisation ou pour la fermeture/ouverture d'un volet en fonction de l'ensoleillement ou de l'horaire. Les unités logiques peuvent être configurées pour effectuer des opérations de combinaison.

Une fois les données d'entrées traitées par la ou les unités logiques, le résultat du traitement, par exemple une commande moteur, est transmis à la ou les sorties concernées. A la réception, le résultat du traitement va déclencher la sortie concernée.

Il est à noter que les unités logiques sont neutres. Elles traitent des données d'entrées indépendamment de leur nature. Une même unité logique peut aussi bien traiter des données provenant d'un capteur de température que d'un capteur vent ou que d'un point de commande. Les unités logiques n'ont également aucune connaissance de la nature des sorties. Les unités logiques sont simplement configurées pour modifier une ou plusieurs données d'entrées en une ou plusieurs valeurs destinées à être transmises à une ou plusieurs sorties pour les commander.

Les unités logiques sont réparties sur tout le réseau de communication 14. Leur emplacement ne dépend ni des entrées pour lesquelles elles traitent des données ni des sorties qu'elles commandent. Elles peuvent être utilisées seules ou combinées avec d'autres unités logiques afin d'effectuer des calculs plus complexes. On obtient ainsi un système domotique ayant une « intelligence » qui peut être répartie sur l'ensemble du réseau de communication 14. De plus, cette « intelligence », représentée par les unités logiques, est modulable. Elle peut être agrandie en ajoutant d'autres unités logiques 76 dans le réseau de communication 14.

Les unités logiques peuvent correspondre à des équipements dédiés, c'est-à-dire des équipements dit logiques n'assurant que des fonctions de calcul. A cet effet, optionnellement, le système domotique 4 peut comporter des équipements dits logiques, non illustrés, qui sont dédiés à des fonctions logiques accessibles aux éléments communicants du réseau de communication 14. Il peut s'agir, par exemple, d'un serveur de calcul électronique, d'un ordinateur, d'un module de traitement du signal de type DSP pour « *Digital Signal Processor* » en langue anglaise, un serveur de stockage de données *(« network access sucrage* » en langue anglaise). Dans ce qui suit, tout ce qui est décrit en référence aux équipements domotiques 6, 8, 10 s'applique également à de tels équipements dit logiques. Les équipements dits logiques comprennent au moins une interface réseau à laquelle a été attribuée une adresse réseau de façon à pouvoir être adressable.

Les unités logiques peuvent être intégrées dans des éléments communicants, par exemple un moteur ou un point de commande. Le point de commande est ainsi vu par le système domotique 4 comme une ou plusieurs entrées 72 et une ou plusieurs unités logiques 76. De ce fait, des unités logiques et des entrées, ou des sorties, peuvent avoir la même adresse réseau. Une unité logique peut également être intégrée dans un équipement réseau 22, 24 ou un capteur 10.

Des unités logiques peuvent être des équipements logiques évolués configurés pour mettre en œuvre des fonctions domotiques spécifiques en collaboration avec les entrées et des sorties. Les fonctions domotiques spécifiques peuvent, par exemple, être des fonctions de gestion des apports solaires sur un bâtiment (ou « *shadow management* » en langue anglaise) des fonctions de suivi du soleil (ou « *sun tracking* » en langue anglaise). Pour cela, les unités logiques peuvent utiliser des données provenant d'entrées de différentes natures comme des capteurs de différents type (luminosité, température vent, heure) et des données provenant de bases de données comme des diagrammes solaire, des années météorologiques typiques (ou TMY pour « *Typical Meteorological Year* » en langue anglaise). Les unités logiques peuvent mettre en œuvre des opérations spécifiques comme des opérations de combinaison de données de natures différentes, selon une plusieurs formules de combinaison prédéfinies. Il peut s'agir de combinaisons de données relatives à une orientation solaire avec des données relatives à une luminance solaire dans une application de suivi du soleil.

Les unités logiques peuvent mettre en œuvre des opérations de gestion d'accès à une ou plusieurs bases de données, par exemple, dans le cadre d'une application de gestion des apports solaire afin de récupérer des données préenregistrées relative à la configuration spatiale du bâtiment 2 et des données relative à des masque d'ombrage dus à l'environnement urbain ou des données relatives à un diagramme solaire en vue de prévoir l'ensoleillement reçu sur une façade du bâtiment en fonction de l'heure de la journée.

L'état de chaque ressource 72, 74, 76 est une variable, ici stockée au sein de la mémoire du calculateur électronique. Cette variable peut être de type entier, ou chaîne de caractères et/ou de symboles, ou une valeur booléenne, ou un ensemble indexable d'éléments (ou « array » en langue anglaise) ou tout autre type de données prédéfini. Toutefois, quel que soit le type de données choisi, ce type de données est le même pour tous les objets logiciels 70. Ces états des ressources 72, 74, 76 peuvent être modifiés au moyen d'accesseurs, ou fonctions d'appel, spécifiques définis par l'interface logicielle de programmation applicative.

Dans cet exemple, l'interface logicielle de programmation applicative est adaptée pour lister les ressources 72, 74, 76 disponibles sur l'objet logiciel 70 ainsi que pour lister les objets logiciels fils rattachés à cet objet logiciel 70. Ces informations sont par exemple listées au sein de variables dédiées accessibles par l'interface, telles que des chaînes indexables de caractères (ou « string arrays » en langue anglaise).

L'état 78 associé à chaque ressource 72, 74, 76 peut varier au cours du temps. Il est ici défini de façon déterministe, en fonction des données qui entrent sur les entrées 72, au moyen de règles prédéfinies. Ces règles sont par exemple enregistrées au sein même du calculateur électronique associé à cet équipement domotiques 6, 8, 10.

Chaque ressource 72, 74, 76 a un état 78 initial. Par exemple, une ressource reçoit, sur la ou les entrées 72 correspondantes, des données d'entrée pendant un laps de temps prédéfini. A l'issue de ce laps de temps, un nouvel état 78 est calculé, qui est fonction de l'état initial et des données d'entrées reçues pendant ce laps de temps. Ce calcul est réalisé en fonction de règles prédéfinies.

Ainsi, l'état d'une entrée peut correspondre à la mesure d'un paramètre ou ou à un état réel d'un équipement domotique 6, 8, 10. De même, l'état d'une sortie 74 peut correspondre à une consigne relative à un paramètre, une position ou une température par exemple.

Ainsi, le comportement de chaque équipement domotique 6, 8, 10 est déterministe et dépend des interactions entre cet équipement domotique et son extérieur, ces interactions pouvant être mesurées et contrôlées. L'état de chaque équipement domotique 6, 8, 10 est accessible par les autres équipements domotique 6, 8, 10 connectés au réseau de communication 14 par l'intermédiaire de l'interface logicielle de programmation applicative, l'état de l'équipement domotique pouvant correspondre à l'état d'une ressource associée à cet équipement domotique. Ce type d'architecture orientée ressources contraste avec les systèmes domotiques connus comprenant une unité de commande dans lesquels l'état d'un équipement à un instant donné n'a pas moyen d'être connu par les autres équipements domotiques, sauf à passer par l'unité de commande.

Chaque équipement 6, 8, 10 est programmé, grâce au calculateur électronique précité, pour répondre automatiquement à des requêtes provenant d'autres nœuds du réseau à la manière par exemple d'un serveur HTTP, pour « Hyper Text Transfer Protocol » en langue anglaise.

Ces requêtes sont, par exemple, contenues dans des messages qui circulent sur le réseau de communication 14. Par exemple, ces messages sont échangés par le biais du protocole de datagramme utilisateur ou UDP pour « User Datagram Protocol »en langue anglaise.

Par exemple, chaque message contient un identifiant de l'équipement domotique 6, 8, 10 ciblé ainsi qu'une ou plusieurs commandes, pouvant être accompagnées de paramètres ou variables associés à ces commandes.

Par exemple, l'interface logicielle de programmation applicative utilise des protocoles comprenant des requêtes HTTP. A titre d'exemple illustratif, les commandes correspondent à des commandes HTTP connues telles que GET, POST, PUT, REPLY ou encore DELETE.

Chaque objet logiciel 70 est ici identifié au sein du protocole applicatif du système domotique 4 par un chemin d'accès unique. Ce chemin d'accès est par exemple un identifiant uniforme de ressource, noté URI pour « Uniform Resource Identifier » en langue anglaise. Ce chemin d'accès est par exemple une chaîne de caractères alphanumériques et/ou de symboles prédéfinis.

En outre, chacun peut fonctionner à la manière d'un proxy HTTP en relayant des messages à destination d'autres équipements domotiques du réseau communication 14.

Avantageusement, l'interface logicielle de programmation applicative comporte une fonction permettant de consulter l'état d'une ou plusieurs propriétés 76 de l'objet logiciel 70, par exemple, pour obtenir une liste des ressources de l'équipement domotique. Ainsi, cette fonction, lorsqu'elle est appelée au moyen d'une requête correspondante, retourne cette liste de propriétés. Cette liste est par exemple transmise à l'émetteur de la requête sous la forme d'un ou de plusieurs messages sur le réseau de communication 14.

L'interface logicielle comporte également une fonction dite d'introspection qui, pour chaque objet logiciel 70, implémente une fonction de découverte pour lister, de façon récursive, chacun des objets logiciels fils associés à cet objet logiciel 70 de manière à établir une ou plusieurs listes de leurs propriétés respectives.

L'interface logicielle de programmation applicative est également implémentée sur les équipements réseau comme les passerelles 22 et les routeurs 24, par exemple au moyen de leurs calculateurs 62 respectifs. De cette manière, un sous réseau peut être représenté par un tel objet logiciel 70, dont les ressources correspondent alors à la réunion des ressources individuelles de chacun des équipements domotiques 6, 8, 10 appartenant au sous-réseau. Les objets logiciels 70 associés à ces équipements domotiques sont, dans ce cas, vus comme des objets logiciels fils qui sont rattachés à l'objet logiciel 70 associé à l'équipement réseau 22, 24 sur lequel sont connectés les équipements domotique.

De manière simple, une ressource de type entrée peut être associée à un capteur de vent, l'état de la ressource étant équivalent à une valeur de vitesse de vent à un instant t. Une ressource de type unité logique peut être associée à un des routeurs du réseau de communication, lequel gère également une ressource de type sortie. Dans cet exemple, l'unité logique peut être définie par une comparaison avec une valeur de vent prédéterminée, et la sortie par un ordre de commande de repli des équipements de type store. L'ordre de commande est par exemple émis sur le réseau Un tel équipement recevant un tel ordre de commande réagira en conséquence. Ce même équipement peut posséder une ressource de type entrée, dans laquelle sera inscrite son état, au cours de l'exécution de l'ordre puis en fin d'exécution. L'état de cette ressource de type entrée peut alors être utilisé dans un but de confirmation de l'exécution de la commande.

En d'autres termes, grâce à la nature de l'interface logicielle de programmation applicative, n'importe quel sous-système SN, SSN, du réseau de communication 14 peut être vu comme un système à part entière, modélisé indépendamment du reste du réseau de communication 14 et étant décrit de façon globale en termes d'entrées, de sorties et de ressources des équipements domotiques 6, 8, 10 qui appartiennent à ce sous-réseau.

Grâce à une telle architecture et en fonction de la programmation de ces ressources, un sous-réseau comprenant des équipements domotiques 6, 8, 10 peut être considéré comme un sous-système domotique à part entière, pouvant le cas échéant fonctionner indépendamment du reste du système 4, par exemple en cas de défaillance au cours de laquelle ledit sous-réseau se trouve isolé du reste du réseau de communication 14 et ne peut plus communiquer avec celui-ci. De même, le reste du système domotique 4 peut continuer de fonctionner lorsque certains composants, tels que ces équipements domotiques 6, 8 et 10, sont indisponibles ou injoignables.

Cela contraste avec les systèmes domotiques connus dans lesquels le fonctionnement des équipements domotiques est dépendant de l'unité de commande, par exemple, les systèmes domotiques basés sur un fonctionnement maître-esclave. Dans de tels systèmes domotiques, les opérations logiques sont réalisées par l'unité de commande, de façon centralisée. Ainsi, en cas de défaillance du réseau de communication, par exemple, en cas de coupure accidentelle d'un câble, conduisant à isoler un ou plusieurs de ces équipements domotiques de l'unité de commande, ceux-ci ne peuvent plus fonctionner de façon automatique. Ces équipements domotiques peuvent être certes commandés manuellement, par exemple au moyen d'un point de commande local connecté à l'équipement domotique par une liaison filaire, mais ils ne peuvent alors plus fonctionner selon une programmation automatique, par exemple, en fonction de valeurs mesurées par des capteurs, puisque les fonctions logiques sont implémentées uniquement par l'unité centrale à laquelle ils n'ont plus accès.

De façon différente, du fait que les ressources logiques sont réparties au sein du réseau de communication 14 dans les différents sous-réseaux, un fonctionnement gouverné selon des règles automatiques reste possible. En effet, dans un tel exemple, l'équipement réseau et/ou l'équipement domotique concerné peut trouver les ressources logiques nécessaires à son fonctionnement, par exemple en explorant les interfaces logicielles des objets logiciels correspondant aux équipements domotiques auxquels il est toujours connecté. En d'autres termes, l'intelligence du système domotique 4 est répartie au sein du réseau de communication 14. L'unité de commande 12 peut donc être omise et le réseau fonctionner de manière autonome.

Un mode de réalisation présente un procédé de configuration d'un système domotique 4 pour un bâtiment 2. Ce procédé est mis en œuvre par un dispositif de configuration afin de configurer le système domotique 4. A cet effet, l'outil de configuration peut comprendre un module de configuration programmé pour mettre en œuvre le procédé de configuration. On suppose que le système domotique comprend une pluralité d'éléments communicants 6, 8, 10, 22, 24 configurés pour effectuer une pluralité de fonctions domotiques et un réseau de communication 14 auquel sont connectés les éléments communicants.

Afin de configurer le système domotique, l'installateur connecte le dispositif de configuration en un point quelconque du réseau de communication et met en œuvre une procédure de découverte afin de recenser les éléments communicants 6, 8, 10, 22, 24 présents dans le système domotique.

Une cartographie dans le réseau de communication des différentes ressources 72, 74, 76 proposées par chaque élément communicant découvert est ensuite effectuée. Au cours de cette étape de cartographie, le dispositif de configuration peut interroger chaque élément communicant découvert afin de dénombrer les ressources 72, 74, 76 qu'ils proposent et connaitre les fonctions qu'ils sont capables d'effectuer. Ceci sous-entend que le protocole de communication soit introspectable, c'est à dire que chaque élément communicant soit capable de s'introspecter afin de parcourir son arborescence et découvrir les différents objets logiciels dont il dispose et qu'il peut implémenter.

Le dispositif de configuration peut également associer un identifiant uniforme de ressource URI unique à chaque ressource dénombrée. L'identifiant uniforme de ressource contient l'adresse réseau de l'interface réseau de l'élément communicant modélisé, au moins en partie, par cette ressource.

Les fonctions domotiques du système domotique 4 sont ensuite programmées en tenant compte de la cartographie des ressources 72, 74, 76 dans le réseau de communication 14. L'étape de programmation comprend d' établir des liens entre des entrées 72, des unités logiques 76 et des sorties 74 et à configurer les unités logiques 76 afin de traiter des données fournies par les entrées 72 et transmettre le résultat du traitement aux sorties 76 afin de les commander.

L'étape de programmation peut également comprendre de transmettre, à au moins certaines ressources, les liens établis et ainsi à permettre le fonctionnement autonome du réseau.

En particulier, l'état d'une ressource de type unité logique peut comprendre non seulement une fonction, mais également les liens établis lors de la programmation, par exemple, l'identification de la ressource d'entrée à récupérer et de la ressource de sortie à mettre à jour.

Afin de réaliser une fonction domotique, le traitement des données fournies par une ou plusieurs entrées peut être réalisé par une seule unité logique ou peut être divisé entre plusieurs unités logiques distinctes réparties dans le réseau de communication 14.

Suivant un mode de mise en œuvre, les liens entre les entrées, les unités logiques et les sorties peuvent être établis de façon automatique par le dispositif de configuration.

A cet effet, le dispositif de programmation peut comprendre une ou plusieurs bibliothèques de fonctions domotiques, par exemple stockées dans une zone mémoire du dispositif. Cette bibliothèque de fonction permet à l'outil de configuration de connaitre les types de ressources nécessaires pour réaliser chaque fonction domotique. En d'autres termes, les liens entre les entrées, les unités logiques et les sorties sont par exemple établis de façon automatique par le dispositif de configuration, en fonction des bibliothèques de fonctions domotiques.

A titre d'exemple, la bibliothèque peut indiquer que pour réaliser une fonction de protection solaire, le système a besoin d'une ou plusieurs entrées configurées pour fournir des données qui correspondent à des informations de luminosité, une ou plusieurs unités logiques capable de traiter les données fournies par les entrées et de transmettre les données traitées à une ou plusieurs sorties. L'unité logique peut par exemple être programmée pour comparer les données fournies par la ou les entrées à une valeur de seuil prédéterminée et, lorsque cette valeur de seuil est atteinte, transmettre une commande à un moteur, par exemple afin de baisser un store.

Le procédé de configuration peut être mis en œuvre de façon automatique par le dispositif de configuration à la suite de sa connexion sur le réseau de communication 14.

Un autre mode de réalisation de l'invention porte sur un procédé de maintenance d'un système domotique pour bâtiment. On suppose qu'au préalable le système domotique a été configuré, par exemple selon le procédé de configuration décrit précédemment. Le procédé de maintenance peut être mis en œuvre par un outil de maintenance. Suivant un mode de réalisation, l'outil de maintenance et l'outil de configuration précédemment décrit peuvent être identiques.

L'outil de maintenance peut être connecté en un point quelconque du réseau de communication. Le procédé de maintenance comprend une étape de découverte des éléments communicants 6, 8, 10, 22, 24 présents dans le système domotique, une étape de cartographie dans le réseau de communication 14, de ressources 72, 74, 76 que proposent chaque élément communicant découvert et une étape de récupération des différents liens entre les ressources de chaque élément communicant découvert ainsi que leurs états. Comme décrit précédemment, l'étape de cartographie des ressources comprend une sous-étape de dénombrement des ressources 72, 74, 76 que proposent chaque élément communicant découvert et une sous-étape d'association d'un identifiant de ressource uniforme à chaque ressource dénombrée.

Le procédé peut comprendre une étape de reprogrammation de fonctions domotiques du système domotique 4. Cette reprogrammation peut être réalisée en tenant compte d'une nouvelle cartographie des ressources 72, 74, 76 dans le réseau de communication et/ou de nouvelles fonctions domotiques à réaliser.

Le procédé de maintenance peut comprendre une étape de correction de ressources et/ou de liens défectueux, par exemple suite à une ou plusieurs pannes dans le système domotique.

Le procédé de maintenance peut par exemple être mis en œuvre suite à l'ajout de nouveaux éléments communicants dans le système domotique et/ou la réalisation de nouvelles fonctions domotique par rapport à une configuration initiale. L'étape de reprogrammation peut donc consister à établir des liens entre des entrées, des unités logiques et des sorties et configurer les unités logiques afin de traiter des données fournis par les entrées et transmettre le résultat du traitement aux sorties afin de les commander.

Suivant un mode de mis en œuvre, l'outil de maintenance peut enregistrer dans une zone mémoire une configuration précédente du système domotique. Cette ancienne configuration peut être comparée à la configuration actuelle du système domotique par exemple dans le but de détecter d'éventuelles pannes et/ou défaillance dans le système domotique. Cette comparaison peut également avoir pour but de découvrir de nouveau éléments communicant installé depuis la dernière intervention.

L'installation et la maintenance du système domotique sont également facilitées. En effet, lorsqu'un installateur souhaite vérifier l'état du système domotique 4, par exemple pour rajouter des équipements réseau ou des équipements domotiques ou pour établir un diagnostic, il ne sait pas toujours au préalable quels équipements réseau ou domotiques sont déjà installés ni comment ils interagissent avec le reste du système domotique 4. Grâce à l'invention, il suffit de mettre en œuvre des étapes de détection des ressources au sein du système domotique 4, soit à l'échelle du système domotique 4 complet, soit au niveau d'un ou plusieurs sous-réseaux, voire au niveau d'un ou plusieurs équipements réseau ou domotiques afin de lister les ressources disponibles ainsi que leurs états respectifs. Ceci est par exemple réalisé en connectant un terminal client tel qu'un ordinateur ou un dispositif de communication mobile connecté au réseau de communication 14, muni d'un écran et adapté pour accéder à l'interface logicielle et afficher une liste ou une cartographie des différentes ressources.

En particulier, lorsque les sous-réseaux SN, SSN, sont associés à des zones du bâtiment 2, l'interface logicielle permet de lister facilement les ressources offertes par les équipements domotiques associés à ces zones, ainsi qu'aux entrées-sorties qui leur sont associées.

Cela offre une meilleure vision du système 4 et de son état.

Les modes de réalisation et les variantes envisagés ci-dessus peuvent être combinés entre eux pour générer de nouveaux modes de réalisation.

## Revendications

1. Procédé de configuration d'un système domotique (4) pour un bâtiment (2) mis en œuvre par un dispositif de configuration, le système domotique comprenant une pluralité d'éléments communicants (6, 8, 10, 22, 24) afin d'effectuer une pluralité de fonctions domotiques et un réseau de communication (14) auquel sont connectés les éléments communicants, chaque élément communicant comprenant une interface réseau possédant une adresse réseau et un calculateur électronique implémentant un ou plusieurs objets logiciels (70) modélisant cet élément communicant sous forme de ressources d'au moins trois types : entrée (72), sortie (74) et unité logique (76),
le système domotique (4) comportant également une couche applicative logicielle dans laquelle les ressources que peut fournir chaque élément communicant (6, 8, 10, 22, 24) à chaque instant sont accessibles au moyen d'une interface logicielle de programmation applicative implémentée par le calculateur électronique de chaque élément communicant (6, 8, 10, 22, 24) ;
chaque objet logiciel (70) étant une représentation logicielle d'au moins une partie d'un élément communicant au sein de la couche applicative logicielle,
le procédé comprenant des étapes de :
- découverte des différents éléments communicants du réseau de communication (14),
- cartographie, dans le réseau de communication (14), des ressources (72, 74, 76) que proposent chaque élément communicant découvert, l'étape de cartographie des ressources comprend une sous-étape de dénombrement des ressources que proposent chaque élément communicant découvert et une sous-étape d'association d'un identifiant de ressource à chaque ressource dénombrée ;
- programmation des fonctions domotiques du système domotique (4) en tenant compte de la cartographie des ressources (72, 74, 76) dans le réseau de communication (14), l'étape de programmation comportant l'établissement de liens entre des entrées, des unités logiques et des sorties et la configuration des unités logiques pour qu'elles puissent traiter des données fournies par les entrées et transmettre le résultat du traitement aux sorties afin de les commander.

2. Procédé selon la revendication 1, dans lequel l'étape de programmation comprend de transmettre, à au moins certaines ressources (72, 74, 76), les liens établis.

3. Procédé selon la revendication 2, comprenant d'établir les liens entre les entrées, les unités logiques et les sorties de façon automatique par le dispositif de configuration, en fonction de bibliothèques stockées dans une zone mémoire du dispositif de configuration.

4. Procédé selon une des revendications 1 à 3, dans lequel la mise en œuvre du procédé est divisée entre plusieurs unités logiques distinctes réparties dans le réseau de communication.

5. Procédé selon une des revendications précédentes, dans lequel le procédé est mis en œuvre automatiquement par le dispositif de configuration à la suite de sa connexion en un point quelconque du réseau de communication (14).

6. Système domotique (4) pour un bâtiment (2), le système domotique étant configuré par le procédé de configuration selon une des revendications précédentes, le système domotique comprenant une pluralité d'éléments communicants (6, 8, 10, 22, 24) afin d'effectuer une pluralité de fonctions domotiques et un réseau de communication (14) auquel sont connectés les éléments communicants, chaque élément communicant comprenant une interface réseau possédant une adresse réseau et implémentant un ou plusieurs objets logiciels (70) modélisant cet élément communicant sous forme de ressources (72, 74, 76) d'au moins trois types : entrée (72), sortie (74) et unité logique (76) ;
le système domotique (4) comportant également une couche applicative logicielle dans laquelle les ressources que peut fournir chaque élément communicant (6, 8, 10, 22, 24) à chaque instant sont accessibles au moyen d'une interface logicielle de programmation applicative implémentée par le calculateur électronique de chaque élément communicant (6, 8, 10, 22, 24) ;
chaque objet logiciel (70) étant une représentation logicielle d'au moins une partie d'un élément communicant au sein de la couche applicative logicielle.

7. Système selon la revendication précédente dans lequel chaque ressource est identifiée par un identifiant de ressource (URI) unique contenant l'adresse réseau de l'interface réseau de l'élément communicant modélisé, au moins en partie, par cette ressource.

8. Système selon la revendication 6 ou 7 dans lequel un capteur (10) ou un point de commande (8) est modélisé sous la forme d'au moins une entrée (72).

9. Système selon une des revendications 6 à 8 dans lequel un appareil domotique commandable est modélisé sous la forme d'au moins une sortie (74).

10. Système selon une des revendications 6 à 10 dans lequel un équipement réseau (22, 24) est modélisé sous la forme d'au moins une unité logique (76).

11. Système selon la revendication précédente, dans lequel le réseau de communication (14) est agencé sous forme de réseau hiérarchique.

12. Procédé de maintenance d'un système domotique pour un bâtiment selon une des revendications 6 à 11, le système domotique étant configuré par le procédé de configuration selon une des revendications 1 à 5, le procédé de maintenance comprenant des étapes de :
- découverte de différents éléments communicants du réseau de communication (14),
- cartographie, dans le réseau de communication (14), de ressources (72, 74, 76) que proposent chaque élément communicant découvert, l'étape de cartographie des ressources comprend une sous-étape de dénombrement des ressources que proposent chaque élément communicant découvert et une sous-étape d'association d'un identifiant de ressource à chaque ressource dénombrée ;
- récupération des différents liens entre les ressources de chaque élément communicant découvert ainsi que leurs états, l'étape de programmation comportant l'établissement de liens entre des entrées, des unités logiques et des sorties et la configuration des unités logiques pour qu'elles puissent traiter des données fournies par les entrées et transmettre le résultat du traitement aux sorties afin de les commander.

13. Procédé selon la revendication 12, comprenant en outre une étape de reprogrammation de fonctions domotiques du système domotique (4) en tenant compte d'une nouvelle cartographie des ressources (72, 74, 76) dans le réseau de communication (14) et/ou de nouvelles fonctions domotiques à réaliser.

14. Procédé selon une des revendications 12 à 13 comprenant en outre une étape de correction de ressources et/ou de liens défectueux.

## Patentansprüche

1. Verfahren zum Konfigurieren eines Gebäudeautomationssystems (4) für ein Gebäude (2), das durch eine Konfigurationsvorrichtung implementiert wird, das Gebäudeautomationssystem umfassend eine Vielzahl von kommunizierenden Elementen (6, 8, 10, 22, 24) zum Ausführen einer Vielzahl von Gebäudeautomationsfunktionen und ein Kommunikationsnetz (14), mit dem die kommunizierenden Elemente verbunden sind, jedes kommunizierende Element umfassend eine Netzschnittstelle, die eine Netzadresse und ein elektronisches Rechengerät aufweist, das ein oder mehrere Software-Objekte (70) implementiert, die dieses kommunizierende Element in Form von Ressourcen von mindestens drei Typen modellieren: Eingang (72), Ausgang (74) und logische Einheit (76),
das Gebäudeautomationssystem (4) auch umfassend eine Software-Anwendungsschicht, in der die Ressourcen, die jedes kommunizierende Element (6, 8, 10, 22, 24) zu jedem Zeitpunkt bereitstellen kann, mittels einer Software-Anwendungsprogrammierschnittstelle zugänglich sind, die durch das elektronische Rechengerät von jedem kommunizierenden Element (6, 8, 10, 22, 24) implementiert wird;
wobei jedes Software-Objekt (70) eine Software-Darstellung von mindestens einem Teil eines kommunizierenden Elements innerhalb der Software-Anwendungsschicht ist,
das Verfahren umfassend die folgenden Schritte:
- Entdecken der verschiedenen kommunizierenden Elemente des Kommunikationsnetzes (14),
- Abbildung, in dem Kommunikationsnetz (14), der Ressourcen (72, 74, 76), die von jedem entdeckten kommunizierenden Element bereitgestellt werden, wobei der Schritt einer Abbildung der Ressourcen einen Teilschritt eines Zählens der Ressourcen, die von jedem entdeckten kommunizierenden Element bereitgestellt werden, und einen Teilschritt eines Assoziierens einer Ressourcen-Kennung zu jeder gezählten Ressource umfasst;
- Programmierung der Gebäudeautomationsfunktionen des Gebäudeautomationssystems (4) unter Berücksichtigung der Abbildung der Ressourcen (72, 74, 76) in dem Kommunikationsnetz (14), der Programmierschritt umfassend die Herstellung von Verbindungen zwischen den Eingängen, den logischen Einheiten und den Ausgängen und die Konfiguration der logischen Einheiten, damit sie die Daten, die von den Eingängen bereitgestellt werden, verarbeiten und das Resultat der Verarbeitung an die Ausgänge zu deren Steuerung übertragen können.

2. Verfahren nach Anspruch 1, wobei der Programmierschritt ein Übertragen der hergestellten Verbindungen an mindestens bestimmte Ressourcen (72, 74, 76) umfasst.

3. Verfahren nach Anspruch 2, umfassend ein Herstellen der Verbindungen zwischen den Eingängen, den logischen Einheiten und den Ausgängen auf automatische Weise durch die Konfigurationsvorrichtung abhängig von Bibliotheken, die in einem Speicherbereich der Konfigurationsvorrichtung gespeichert sind.

4. Verfahren nach einem der Ansprüche 1 bis 3, wobei die Durchführung des Verfahrens auf mehrere verschiedene logische Einheiten aufgeteilt ist, die in dem Kommunikationsnetz verteilt sind.

5. Verfahren nach einem der vorherigen Ansprüche, wobei das Verfahren durch die Konfigurationsvorrichtung automatisch nach deren Verbindung an einem beliebigen Punkt des Kommunikationsnetzes (14) ausgeführt wird.

6. Gebäudeautomationssystem (4) für ein Gebäude (2), wobei das Gebäudeautomationssystem durch das Konfigurationsverfahren nach einem der vorherigen Ansprüche konfiguriert wird, das Gebäudeautomationssystem umfassend eine Vielzahl von kommunizierenden Elementen (6, 8, 10, 22, 24), zum Ausführen einer Vielzahl von Gebäudeautomationsfunktionen und ein Kommunikationsnetz (14), mit dem die kommunizierenden Elemente verbunden sind, jedes kommunizierende Element umfassend eine Netzschnittstelle, die eine Netzadresse aufweist und ein oder mehrere Software-Objekte (70) implementiert, die dieses kommunizierende Element in Form von Ressourcen (72, 74, 76) von mindestens drei Typen modellieren: Eingang (72), Ausgang (74) und logische Einheit (76);
das Gebäudeautomationssystem (4) auch umfassend eine Software-Anwendungsschicht, in der die Ressourcen, die jedes kommunizierende Element (6, 8, 10, 22, 24) zu jedem Zeitpunkt bereitstellen kann, mittels einer Software-Anwendungsprogrammierschnittstelle zugänglich sind, die durch das elektronische Rechengerät von jedem kommunizierenden Element (6, 8, 10, 22, 24) implementiert wird;
wobei jedes Software-Objekt (70) eine Software-Darstellung von mindestens einem Teil eines kommunizierenden Elements innerhalb der Software-Anwendungsschicht ist.

7. System nach dem vorherigen Anspruch, wobei jede Ressource durch eine eindeutige Ressourcen-Kennung (URI) identifiziert ist, die die Netzadresse der Netzschnittstelle des kommunizierenden Elements enthält, das mindestens teilweise durch diese Ressource modelliert wird.

8. System nach Anspruch 6 oder 7, wobei ein Sensor (10) oder ein Steuerpunkt (8) in Form von mindestens einem Eingang (72) modelliert wird.

9. System nach einem der Ansprüche 6 bis 8, wobei ein steuerbares Gebäudeautomationsgerät in Form von mindestens einem Ausgang (74) modelliert wird.

10. System nach einem der Ansprüche 6 bis 10, wobei ein Netzwerkgerät (22, 24) in Form von mindestens einer logischen Einheit (76) modelliert wird.

11. System nach dem vorherigen Anspruch, wobei das Kommunikationsnetz (14) in Form eines hierarchischen Netzes angeordnet ist.

12. Wartungsverfahren eines Gebäudeautomationssystems für ein Gebäude nach einem der Ansprüche 6 bis 11, wobei das Gebäudeautomationssystem durch das Konfigurationsverfahren nach einem der Ansprüche 1 bis 5 konfiguriert ist, das Wartungsverfahren umfassend die folgenden Schritte:
- Entdecken verschiedener kommunizierender Elemente des Kommunikationsnetzes (14),
- Abbildung, in dem Kommunikationsnetz (14), von Ressourcen (72, 74, 76), die von jedem entdeckten kommunizierenden Element bereitgestellt werden, wobei der Schritt einer Abbildung der Ressourcen einen Teilschritt eines Zählens der Ressourcen, die von jedem entdeckten kommunizierenden Element bereitgestellt werden, und einen Teilschritt eines Assoziierens einer Ressourcen-Kennung zu jeder gezählten Ressource umfasst;
- Abrufung der verschiedenen Verbindungen zwischen den Ressourcen von jedem erkannten kommunizierenden Element sowie deren Zustände, der Programmierschritt umfassend die Herstellung von Verbindungen zwischen den Eingängen, den logischen Einheiten und den Ausgängen und die Konfiguration der logischen Einheiten, damit sie die Daten, die von den Eingängen bereitgestellt werden, verarbeiten und das Resultat der Verarbeitung an die Ausgänge zu deren Steuerung übertragen können.

13. Verfahren nach Anspruch 12, ferner umfassend einen Neuprogrammierungsschritt von Gebäudeautomationsfunktionen des Gebäudeautomationssystems (4) unter Berücksichtigung einer neuen Abbildung der Ressourcen (72, 74, 76) in dem Kommunikationsnetz (14) und/oder neuer auszuführender Gebäudeautomationsfunktionen.

14. Verfahren nach einem der Ansprüche 12 bis 13, ferner umfassend einen Korrekturschritt fehlerhafter Ressourcen und/oder Verbindungen.

## Claims

1. Method for configuring a home automation system (4) for a building (2) executed by a configuration device, wherein the home automation system comprises a plurality of communicating devices (6, 8, 10, 22, 24) in order to carry out a plurality of home automation functions and a communications network (14) to which the communicating devices are connected, wherein each communicating device comprises a network interface having a network address and an electronic controller implementing one or more software objects (70) that model the communicating device in the form of resources of at least three types: input (72), output (72), and logical unit (76),
wherein the home automation system (4) also includes a software application layer in which the resources that can be provided by each home automation device at any time are accessible by means of an application programming interface implemented by the electronic controller of each communicating device,
wherein each software object (70) is a software representation of at least one part of a communicating device in the software application layer,
wherein the method comprises the steps of:
- discovering the different communicating devices of the communications network (14),
- mapping the resources (72, 74, 76) offered by each communications device discovered on the communications network (14), this step comprising a sub-step of enumerating the resources (72, 74, 76) offered by each communicating device discovered and a sub-step of associating a resource identifier with each resource enumerated,
- programming home automation functions of the home automation system (4), taking into account the map of the resources (72, 74, 76) on the communications network (14), this step comprising establishing links between the inputs, logical units, and outputs and configuring the logical units in order to process data provided by the inputs and transmit the result of the processing to the outputs in order to control the output objects.

2. Method according to claim 1, wherein the programming step comprises transmitting the links established to at least some resources (72, 74, 76).

3. Method according to claim 2, comprising establishing the links between the inputs, the logical units, and the outputs are automatically by the configuration device depending on libraries stored in a memory zone of the configuration device.

4. Method according to any of claims 1 to 3, wherein the execution of the method is divided between several distinct logical units distributed within the communications network.

5. Method according to any of the foregoing claims, wherein the method is automatically executed by the configuration device after it connects to any point on the communications network (14).

6. Home automation system (4) for a building (2), wherein the home automation system is configured by the configuration method according to any of the foregoing claims, wherein the home automation system comprises a plurality of communicating devices (6, 8, 10, 22, 24) in order to carry out a plurality of home automation functions and a communications network (14) to which the communicating devices are connected, wherein each communicating device comprises a network interface having a network address and implementing one or more software objects (70) that model the communicating device in the form of resources (72, 74, 76) of at least three types: input (72), output (72), and logical unit (76),
wherein the home automation system (4) also includes a software application layer in which the resources that can be provided by each home automation device at any time are accessible by means of an application programming interface implemented by the electronic controller of each communicating device,
and wherein each software object (70) is a software representation of at least one part of a communicating device in the software application layer,.

7. System according to the foregoing claim, wherein each resource is identified by a unique resource identifier (URI) containing the network address of the network interface of the communicating device modelled, at least in part, by the resource.

8. System according to claim 6 or 7, wherein a sensor (10) or a control point (8) is modelled in the form of at least one input (72).

9. System according to any of claims 6 to 8, wherein a controllable home automation device is modelled in the form of at least one output (74).

10. System according to any of claims 6 to 9, wherein a network device (22, 24) is modelled in the form of at least one logical unit (76).

11. System according to the foregoing claim, wherein the communications network (14) is arranged in the form of a hierarchical network.

12. Method for maintaining a home automation system for a building according to any of claims 5 to 11, wherein the home automation system is configured by the configuration method according to any of claims 1 to 5, wherein the maintenance method comprises the steps of:
- discovering different communicating devices of the communications network (14),
- mapping resources (72, 74, 76) offered by each communications device discovered on the communications network (14), this step comprising a sub-step of enumerating the resources (72, 74, 76) offered by each communicating device discovered and a sub-step of associating a resource identifier with each resource enumerated,
- recovering the various links between the resources of each communicating device discovered, as well as their status, this step comprising establishing links between the inputs, logical units, and outputs and configuring the logical units in order to process data provided by the inputs and transmit the result of the processing to the outputs in order to control the output objects.

13. Method according to claim 12, further comprising a step of reprogramming home automation functions of the home automation system (4) whilst taking into account a new map of the resources (72, 74, 76) on the communications network (14) and/or new home automation functions to be carried out.

14. Method according to any of claims 12 to 13, further comprising a step of correcting defective resources and/or links.
